# EUROPÄISCHE PATENTSCHRIFT

(11) **EP 3 493 095 B1**
(45) Veröffentlichungstag und Bekanntmachung des Hinweises auf die Patenterteilung: **14.10.2020**
(21) Anmeldenummer: 18208146.3
(22) Anmeldetag: 23.11.2018
(51) Int. Cl.: G06F 21/74, G06F 21/85, G06F 21/81

(54) **VERBINDUNGSEINHEIT UND VERFAHREN ZUR ZUGRIFFSSTEUERUNG**
CONNECTION UNIT AND METHOD FOR ACCESS CONTROL
UNITÉ DE CONNEXION ET PROCÉDÉ DE COMMANDE D'ACCÈS

(30) Priorität: 04.12.2017 DE 102017128655
(43) Veröffentlichungstag der Anmeldung: 05.06.2019
(73) Patentinhaber: Elischer, Anna, 72622 Nürtingen (DE); Elischer, Marie, 72622 Nürtingen (DE)
(72) Erfinder: Elischer, Otto, 72622 Nürtingen (DE)
(74) Vertreter: Geitz Truckenmüller Lucht Christ

(56) Entgegenhaltungen:
- EP-A1- 1 521 158
- EP-A1- 1 990 751
- WO-A1-2017/008860
- DE-A1-102015 111 534

## Beschreibung

Die vorliegende Erfindung betrifft eine Verbindungseinheit und ein Verfahren zur Steuerung des Zugriffs eines mit einer Zugriffsschnittstelle verbundenen Datenverarbeitungsgeräts auf ein mit einer Peripherieschnittstelle verbundenes Peripheriegerät.

Relevanter Stand der Technik ist in diesem Zusammenhang bekannt aus der WO 2017/046789 A1, der US 2017/0331857 A1, der US 2004/0210796 A1 und der WO 2017/129184 A1. Ferner ist weiterer Stand der Technik aus der WO 2017/008860 sowie der gleichlautenden DE 10 2015 111 534 A1 vorbekannt.

Es ist bereits seit vielen Jahren bekannt, Geräte mithilfe von Zeitschaltuhren ein- und auszuschalten. Hierfür sind vor allem Geräte bekannt, welche als zeitlich steuerbare Steckdoseneinsätze konzipiert sind, und welche auf der einen Seite selbst die Form eines Steckers besitzen und auf der anderen Seite ihrerseits eine Steckdose aufweisen. Ferner weisen solche Zeitschaltuhren an ihrem Gehäuse ein Bedienelement auf, das es erlaubt, die Zeiträume festzulegen, zu denen die Stromzufuhr durch das Gerät hindurch ermöglicht und zu denen sie abgestellt wird. Solche Geräte betreffen in aller Regel einfache Haushaltsgeräte, deren Stromverbrauch in besondere Ruhezeiten verlegt werden sollen oder die selbsttätig aus und eingeschaltet werden.

Im Bereich der Informationstechnik haben diese Ideen jedoch nie Fuß fassen können, da moderne Datenverarbeitungsgeräte heruntergefahren werden müssen, bevor sie abgeschaltet werden können. Geschieht dies nicht, so können in den Datenverarbeitungsgeräten vorgehaltene Speicher in undefinierte Zustände gelangen, was Datenverluste zur Folge haben kann.

Es sind in diesem Zusammenhang jedoch auch durchaus so genannte unterbrechungsfreie Stromversorgungen bekannt, welche neben der elektrischen Versorgungsspannung, die sie bereitstellen, auch eine Datenleitung zu dem von ihnen versorgten Datenverarbeitungsgerät besitzen, um im Fall eines Stromausfalls und bei Einspringen der Sicherheitsakkumulatoren der Stromversorgung das Datenverarbeitungsgerät geordnet herunterfahren zu können und erst dann den nur noch über die Batterie aufrecht erhaltenen Strom abzuschalten.

Jedoch besteht in diesen Fällen das natürliche Problem, dass während die Geräte abgeschaltet sind, sie nicht benutzt werden können.

Gerade im Bereich der Informationstechnik besteht jedoch ein weiteres Problem. In zunehmendem Maß werden mittlerweile Viren eingesetzt, welche Datenverarbeitungsgeräte befallen und deren Laufwerke verschlüsseln. Durch die Verschlüsselung wird der Inhalt der Laufwerke für den Besitzer unbrauchbar. Zwar wird hierbei in der Regel kein Inhalt gelöscht, jedoch sind die gespeicherten Daten für den Besitzer wertlos, wenn er nicht an die Versender der Viren binnen kürzester Zeit ein Lösegeld bezahlt. Tut er dies, so erhält er im Idealfall einen Schlüssel zum Entschlüsseln der Laufwerke zurück, im schlechtesten Fall sind seine Daten dennoch verloren.

Auch wenn das Datenverarbeitungsgerät mit einem Backup-Laufwerk verbunden ist oder sich ein Datenträger an einer Datenschnittstelle befindet, wird deren Inhalt mit verschlüsselt und gegebenenfalls zerstört.

Eine Lösung würde darin bestehen, Backup-Dateien nur auf einmalig beschreibbare Datenträger zu schreiben oder die Backup-Laufwerke ganz von dem Datenverarbeitungsgerät zu trennen. Im ersten Fall entsteht jedoch bei regelmäßigen Backups eine große Menge verbrauchter Datenträger, im zweiten Fall muss sichergestellt werden, dass ein Trennen des Datenträgers nicht vergessen wird.

Vor diesem Hintergrund liegt der Erfindung die Aufgabe zu Grunde, eine Lösung zu schaffen, die den Einsatz von so genannten Ransom-Viren möglichst effektiv unterbindet.

Dies gelingt durch eine Verbindungseinheit und ein Verfahren zur Steuerung des Zugriffs eines mit einer Zugriffsschnittstelle verbundenen Datenverarbeitungsgeräts auf ein mit einer Peripherieschnittstelle verbundenes Peripheriegerät gemäß den Merkmalen des Anspruchs 1 sowie des nebengeordneten Anspruchs 13. Weitere, sinnvolle Ausgestaltungen der Verbindungseinheit und des Verfahrens können den jeweiligen Unteransprüchen entnommen werden.

Erfindungsgemäß ist vorgesehen, dass eine Verbindung zwischen einem Datenverarbeitungsgerät und einem Peripheriegerät unter Zwischenschaltung einer Verbindungseinheit erfolgt. Diese Verbindungseinheit umfasst einen zeitgesteuerten Schalter, der dafür sorgt, dass das hinter dem Schalter liegende Peripheriegerät nur dann von dem Datenverarbeitungsgerät aus zugegriffen werden kann, wenn der Schalter eine Datenverbindung herstellt. Der zeitgesteuerte Schalter greift im Zuge seiner Zeitsteuerung auf einen Zeitdatenspeicher zurück, in dem Zeitdaten vorgehalten werden. Diese Zeitdaten legen die Schaltzeitpunkte des zeitgesteuerten Schalters fest, die sich entweder direkt aus den Zeitdaten ergeben oder mit ihrer Hilfe von einer Steuereinheit berechnet werden können.

Diese Lösung bringt ganz erhebliche Vorteile, denn das Peripheriegerät kann nicht ohne Weiteres von außen zugegriffen werden, ein Zugang muss vielmehr über den Schalter freigegeben werden. In einem zufälligen Moment kann also ein Dritter nicht über das Datenverarbeitungsgerät hinweg auf das Peripheriegerät zugreifen. Vielmehr müsste hierfür zufällig gerade eine Freigabe in den Zeitdaten des Zeitdatenspeichers vorgesehen sein. Die Wahrscheinlichkeit für einen erfolgreichen Zugriff ist damit bereits deutlich reduziert.

Handelt es sich bei dem Peripheriegerät wie im eingangs beschriebenen Beispiel um ein Sicherungslaufwerk, so kann durch die Zeitschaltung nicht mehr vergessen werden, das Sicherungslaufwerk von dem Datenverarbeitungsgerät zu trennen, so dass trotz des Umstands, dass das Sicherungslaufwerk mit dem Datenverarbeitungsgerät verbunden bleibt, ein Zugriff von außen nicht mehr erfolgen kann. Geht man davon aus, das ein das System befallender Virus durch eine manuelle Aktion ausgelöst werden muss, während Datensicherungen zu Zeiten stattfinden, zu denen gerade kein manueller Zugriff auf das System stattfinden soll, ist das entstehende System sicher vor Datenverlusten durch eine Infizierung des Sicherungslaufwerks.

Handelt es sich um ein anderes Peripheriegerät wie etwa ein Drucker oder ein Faxgerät, so kann hingegen der Betrieb eines solchen Peripheriegeräts in bestimmten Zeitintervallen kontrolliert werden, so dass beispielsweise nachts kein Fax empfangen bzw. kein Dokument gedruckt werden kann. Auch für den Betrieb eines Fernsehers, Unterhaltungselektronik oder von Netzwerktechnik wie Router oder Switches kann die Erfindung eingesetzt werden.

In der konkreten Ausgestaltung der Verbindungseinheit kann es sich um eine Lösung handeln, die innerhalb des Datenverarbeitungsgeräts aufgesetzt wird und damit eine interne Lösung darstellt, oder es kann eine externe Lösung gewählt werden, die beispielsweise in einem eigenen Gehäuse mit Anschlüssen angeordnet ist, an welche Datenverarbeitungsgerät und Peripheriegerät angeschlossen werden können. Prinzipiell ist es möglich, sowohl mehrere Datenverarbeitungsgeräte als auch mehrere Peripheriegeräte mit der Verbindungseinheit zu verbinden. Der Einfachheit halber wird im Folgenden jeweils von einem Datenverarbeitungsgerät und einem Peripheriegerät gesprochen, dies gilt aber insbesondere im Falle der externen Verbindungseinheit auch jeweils für mehrere.

Soweit es sich bei dem Peripheriegerät zunächst um ein internes Sicherungslaufwerk handelt, tritt nur ein Datenverarbeitungsgerät in Erscheinung, von dem aus die Verbindungseinheit angesteuert wird. Es ist sinnvoll, das das Peripheriegerät und die Verbindungseinheit mit einer Stromversorgung, etwa einem Netzgerät, des Datenverarbeitungsgeräts verbunden ist. Hier kann insoweit die Stromversorgung des Peripheriegeräts ganz von der Verbindungseinheit getrennt werden, ebenfalls ist es aber möglich, Stromversorgung und Datenverbindung gleichzeitig mit dem zeitgesteuerten Schalter zu schalten. Mit einigem Vorteil kann zusätzlich auch die Datenverbindung überwacht werden, um sicherzustellen, dass der Datenstrom bei einem Trennen der Verbindung auch tatsächlich gestoppt hat. Dies hilft, Datenverluste zu vermeiden, auf diese Weise können die von dem Zeitdatenspeicher vorgegebenen Zeiten flexibel angepasst werden.

Handelt es sich bei der Verbindungseinheit um ein externes Gerät, so wird sie dem Datenverarbeitungsgerät über einen geeigneten Anschluss, etwa den Universal Serial Bus (USB), einen Power over Ethernet Bus (PoE) oder ein anderes Anschlusssystem verbunden. Vorzugsweise wird ein System verwendet, bei dem das Datenkabel ebenfalls eine Spannungsversorgungsleitung umfasst. Ist dies nicht der Fall, so kann die Verbindungseinheit ein eigenes Netzgerät besitzen.

Schleust die Verbindungseinheit die Stromversorgung, welche von dem Datenverarbeitungsgerät durch, insbesondere wenn das Peripheriegerät seinerseits über das Datenkabel mit Strom versorgt werden soll, so kann die durchgeschaltete Stromversorgung in der Verbindungseinheit fest verdrahtet sein. Wahlweise ist es jedoch auch möglich, die Stromversorgung mit durch den zeitgesteuerten Schalter zu trennen.

Der Verbindungseinheit kann mithin ein Zeitdatenspeicher zugeordnet sein, welcher sich dann innerhalb eines Gehäuses befindet, in welchem die Verbindungseinheit aufgenommen ist. In diesem Fall kann in konkreter weiterer Ausgestaltung dem Gehäuse außerdem bedarfsweise ein Bedienelement zugeordnet sein, über welches der Zeitdatenspeicher programmierbar ist, ihm also Ein- und Ausschaltzeiten zugeordnet werden können.

Bei der Verwendung eines separaten Gehäuses können die Zugriffsschnittstellen der Verbindungseinheiten als Anschlüsse ausgestaltet sein, wie sie bei einer direkten Verbindung zwischen Peripheriegerät und Datenverarbeitungsgerät ebenfalls Einsatz finden würden. Insbesondere die verschiedenen bekannten USB-Anschlüsse und RJ45-Anschlüsse sind hierfür denkbar, aber auch andere Anschlussarten können sinnvoll gewählt werden.

Insbesondere, aber nicht ausschließlich, wenn die Verbindungseinheit als internes Gerät ausgestaltet ist, kann der Zeitdatenspeicher auch außerhalb der Verbindungseinheit angeordnet sein, vorzugsweise direkt in dem Datenverarbeitungsgerät. Es kann sich dabei auch um eine softwarebasierte Datenbank oder Speicherdatei handeln, die direkt auf dem Datenverarbeitungsgerät abgelegt ist und von einem auf dem Datenverarbeitungsgerät steuerbaren Programmprodukt hinterlegt und verändert werden kann.

Gerade, wenn auch nicht ausschließlich, in diesem Fall kann eine in der Verbindungseinheit integrierte Steuereinheit mit einem Sicherungspasswort versehen sein, welches bei jeder Wiederherstellung der Datenverbindung zwischen Datenverarbeitungsgerät und Peripheriegerät erneut von der Steuereinheit abgefragt wird. Bei der Trennung der Datenverbindung kann dann eine Rücksetzung erfolgen, so dass das Passwort danach wieder abgefragt wird. Hierbei kann mit einigem Vorteil das Datenverarbeitungsgerät ein Programmprodukt umfassen, welches das Sicherungspasswort selbsttätig bei jedem Zugriff oder bei Erreichen eines Einschaltintervalls an die Steuereinheit überträgt.

In einem konkreten Fall kann es sich bei dem Peripheriegerät um einen Sicherungsdatenspeicher des Datenverarbeitungsgeräts handeln. In diesem Fall sollte das Einschaltintervall derart gewählt werden, dass eine Abschaltung nicht mitten in der Laufzeit des Backups endet, was die Sicherung beschädigen würde. Mit einigem Vorteil kann dann die Bestimmung der Zeitdaten durch ein auf dem Datenverarbeitungsgerät ablaufendes Programmprodukt erfolgen, wobei eine zuvor ermittelte erwartete Dauer des Sicherungsvorgangs, die etwa eine auf dem Datenverarbeitungsgerät ablaufende Sicherungssoftware bestimmen kann, der Bestimmung des Einschaltintervalls zugrunde gelegt werden kann. Wird beispielsweise eine Dauer des Sicherungsvorgangs von zehn Minuten berechnet, so kann beispielsweise ein Einschaltintervall von fünfzehn Minuten vorgesehen werden, welches kurz vor dem Start des Sicherungsvorgangs beginnt und nach hinten genügend Luft für eventuelle Verzögerungen während des Sicherungsvorgangs lässt. Diese Daten, insbesondere Dauer und Beginn des Einschaltintervalls werden als Zeitdaten in den Zeitdatenspeicher geschrieben und steuern den zeitgesteuerten Schalter. Nach Ablauf des Einschaltintervalls wird die Datenverbindung zwischen dem Datenverarbeitungsgerät und dem Peripheriegerät wieder getrennt.

Um eine maximale Sicherheit vor Zugriffen auf ein solches Sicherungslaufwerk zu erreichen, kann ferner die Verbindungseinheit so angesteuert werden, dass gleichzeitig die Datenverbindung des Datenverarbeitungsgeräts zu dem Peripheriegerät und zu dem Internet über die Verbindungseinheit verlaufen. In diesem Fall können diese Anschlüsse komplementär betrieben werden, also jeweils zu einem Zeitpunkt nur entweder die eine oder die andere Verbindung erlaubt werden. Dies hat den Effekt, dass niemals eine Verbindung vom Internet bis auf das Peripheriegerät, also beispielsweise das Sicherungslaufwerk, erfolgen kann.

Im Fall einer rein über Zeitdaten gesteuerten Trennung der Datenverbindung zwischen der Zugriffsschnittstelle und der Peripherieschnittstelle kann es passieren, dass eine Verbindung getrennt wird, obwohl noch im Normalbetrieb auf das Peripheriegerät zugegriffen wird. Entsprechende, vorab durchgeführte Berechnungen zu einer Restzugriffszeit können unter Umständen unrichtig sein. Daher kann ein Teil der Verbindung mit einigem Vorteil als faseroptische Leitung, etwa als Glasfaser, ausgestaltet sein. Wird diese Glasfaser mit Daten beaufschlagt, so wird zur Übertragung entlang der Glasfaser Licht eingekoppelt, welches sich trotz der geringen Verluste einer solchen Leitung dennoch teilweise an der Außenwand der Faser bricht. Eine solche Erhellung der Außenwand kann mithilfe eines Photodetektors erfasst werden, so dass die Steuereinheit auf diesem Wege Informationen darüber erhält, ob die Datenleitung gerade benutzt wird oder nicht, ohne dass ein Abgreifen von Daten erforderlich wäre. Auch bei Erreichen eines Ausschaltzeitpunkts wird in diesem Fall die Steuereinheit die Datenverbindung nicht trennen, so lange nicht wenigstens für eine Mindesttotzeit keine Lichtimpulse mehr über die faseroptische Leitung übertragen worden sind.

Die vorstehend beschriebene Erfindung wird im Folgenden anhand eines Ausführungsbeispiels näher erläutert.

Es zeigen
- Figur 1: eine Verbindungseinheit zur externen Verbindung eines Datenverarbeitungsgeräts mit einem Peripheriegerät in einer schematischen Darstellung, sowie
- Figur 2: eine Verbindungseinheit zur internen Verbindung des Datenverarbeitungsgeräts mit einem internen Peripheriegerät in einer schematischen Darstellung.

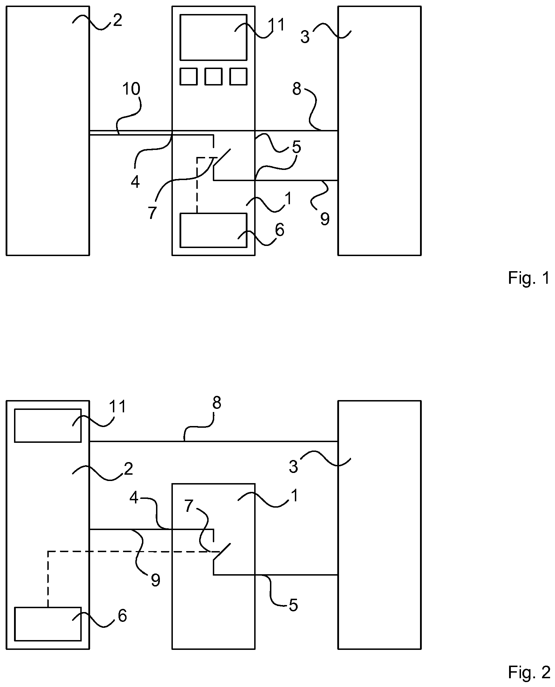

Figur 1 zeigt schematisch eine Verbindungseinheit 1, welche zwischen einem Datenverarbeitungsgerät 2 und einem Peripheriegerät 3 angeordnet ist. Das Datenverarbeitungsgerät 2 ist über ein Datenkabel 10, bestehend aus einer Stromleitung 8 und einer Datenleitung 9, mit der Verbindungseinheit 1 verbunden, indem das Datenkabel 10 in einer Zugriffsschnittstelle 4 der Verbindungseinheit 1 eingesteckt ist. Auf der gegenüberliegenden Seite der Verbindungseinheit 1 ist eine Peripherieschnittstelle 5 angeordnet, in der ein weiteres Datenkabel 10 eingesteckt ist und in dem wiederum Strom leitung 8 und Datenleitung 9 hin zum Peripheriegerät 3 fortgeführt werden.

Lediglich die Datenleitung 9 ist mittels eines zeitgesteuerten Schalters 7 in der Verbindungseinheit 1 unterbrochen, die Stromleitung 8 wird direkt durchgeschleust um das Peripheriegerät 3 stets schnell wieder betriebsbereit zu machen und nicht erst einen Kaltstart abwarten zu müssen. Im Regelfall ist die Datenleitung 9 durch den Schalter 7 unterbrochen. Die Unterbrechung wird von dem Schalter 7 aufgrund eines zeitlichen Ablaufplans herbeigeführt und wieder beseitigt, wobei der Ablaufplan auf in einem Zeitdatenspeicher 6 hinterlegten Zeitdaten, insbesondere Startzeit und Dauer eines Einschaltintervalls, beruht. Mittels eines Bedienelements 11 können Zeitdaten von einem Benutzer erfasst und in den Zeitdatenspeicher 6 geschrieben werden.

Wird nun beispielhaft eine Sicherung von Daten von dem Datenverarbeitungsgerät 2 auf ein als Peripheriegerät 3 eingesetztes Sicherungslaufwerk durch einen Nutzer für einen bestimmten Zeitpunkt geplant, so kann er in dem Zeitdatenspeicher 6 ein Einschaltintervall hinterlegen, welches kurz vor Beginn einer Sicherung auf dem Datenverarbeitungsgerät beginnt und sicherheitshalber etwas länger ist als die erwartete Sicherungsdauer. Dann wird aufgrund der Zeitdaten im Zeitdatenspeicher 6 der Schalter 7 über die Datenleitung 9 eine Datenverbindung zwischen Datenverarbeitungsgerät 2 und Sicherungslaufwerk herstellen. Dann ist aus Sicht des Datenverarbeitungsgeräts 2 das Sicherungslaufwerk sichtbar und kann angesprochen werden. Nach Ablauf des Einschaltintervalls wird der Schalter 7 die Datenleitung 9 wieder trennen, so dass ein Zugriff auf das Sicherungslaufwerk anschließend nicht mehr möglich ist. Bedarfsweise kann dabei das Sicherungslaufwerk auch mit der Verbindungseinheit in einem gemeinsamen Gehäuse aufgenommen sein.

Figur 2 zeigt ein solches Szenario, bei dem Verbindungseinheit 1 und Peripheriegerät 3 gemeinsam in dem Gehäuse des Datenverarbeitungsgeräts 2 aufgenommen sind. In diesem Fall wird das Peripheriegerät 3 direkt von dem Datenverarbeitungsgerät 2 mit Strom gespeist, während alle aktiven Funktionen der Verbindungseinheit 1 auf das Datenverarbeitungsgerät 2 verschoben sind. Auf diese Weise kann der Zeitdatenspeicher 6 in dem Datenverarbeitungsgerät 2 etwa auch als Softwareprodukt realisiert sein, ebenso wie das Bedienelement 11, über welches der Zeitdatenspeicher 6 programmiert werden kann. Auch die Auslösung des Schalters 7 erfolgt von dem Datenverarbeitungsgerät 2 aus. Dennoch kann ohne eine entsprechende Bedienung des Schalters 7, der im Falle des Eindringens eines Computervirus nicht ausgelöst wird, ein Zugriff auf das Peripheriegerät 3 nicht erfolgen.

Vorstehend beschrieben sind somit eine Verbindungseinheit und ein Verfahren zur Steuerung des Zugriffs eines mit einer Zugriffsschnittstelle verbundenen Datenverarbeitungsgeräts auf ein mit einer Peripherieschnittstelle verbundenes Peripheriegerät, wobei eine Zeitschaltuhr zwischen dem Datenverarbeitungsgerät und dem Peripheriegerät eingesetzt wird, so dass der Zugriff nur während vorbestimmter Zeiten möglich ist. Erfolgt ein Hackerangriff auf das Datenverarbeitungsgerät, so kann das solchermaßen gesicherte Peripheriegerät von außen nicht erreicht werden und es bleibt geschützt.

### BEZUGSZEICHENLISTE

- 1: Verbindungseinheit
- 2: Datenverarbeitungsgerät
- 3: Peripheriegerät
- 4: Zugriffsschnittstelle
- 5: Peripherieschnittstelle
- 6: Zeitdatenspeicher
- 7: Schalter
- 8: Stromleitung
- 9: Datenleitung
- 10: Datenkabel
- 11: Bedienelement

## Patentansprüche

1. Verbindungseinheit mit einer Zugriffsschnittstelle (4) und einer Peripherieschnittstelle (5) zur Steuerung des Zugriffs eines mit der Zugriffsschnittstelle (4) verbundenen Datenverarbeitungsgeräts (2) auf ein mit der Peripherieschnittstelle (5) verbundenes Peripheriegerät (3), wobei die Verbindungseinheit (1) einen mit einem Zeitdatenspeicher (6) datenverbundenen, zeitgesteuerten Schalter (7) zur selbsttätigen elektrischen Trennung und Wiederherstellung von Datenverbindungen zwischen dem Datenverarbeitungsgerät (2) und dem Peripheriegerät (3) in Abhängigkeit von in dem Zeitdatenspeicher (6) hinterlegten, Schaltzeitpunkte des Schalters (7) definierenden Zeitdaten umfasst.

2. Verbindungseinheit gemäß Anspruch 1, welche dem Datenverarbeitungsgerät (2) intern zugeordnet ist und wobei es sich bei dem Peripheriegerät (3) um ein internes Sicherungslaufwerk handelt.

3. Verbindungseinheit gemäß Anspruch 2, welche mit einer internen Stromversorgung des Datenverarbeitungsgeräts (2) elektrisch verbunden ist.

4. Verbindungseinheit gemäß Anspruch 1, welche dem Datenverarbeitungsgerät (2) über einen externen Anschluss anverbunden ist.

5. Verbindungseinheit gemäß Anspruch 4, welche über ein separates Netzteil oder über eine Stromleitung (8) eines mit dem Datenverarbeitungsgerät (2) verbundenen Datenkabels (10) mit einer Stromversorgung des Datenverarbeitungsgeräts (2) elektrisch verbunden ist.

6. Verbindungseinheit gemäß Anspruch 5, bei welcher zwischen einer Zugriffsschnittstelle (4) und einer Peripherieschnittstelle (5) eine über diese Peripherieschnittstelle (5) vorgesehene Stromversorgung fest verdrahtet ist.

7. Verbindungseinheit gemäß einem der Ansprüche 4 bis 6, welche in einem Gehäuse aufgenommen ist, in welchem der Zeitdatenspeicher (6) angeordnet ist.

8. Verbindungseinheit gemäß Anspruch 7, **dadurch gekennzeichnet, dass** Zeitdaten in dem Zeitdatenspeicher (6) über ein dem Gehäuse zugeordnetes Bedienelement (11) hinterlegbar sind.

9. Verbindungseinheit gemäß einem der Ansprüche 7 oder 8, **dadurch gekennzeichnet, dass** dem Gehäuse auch das Peripheriegerät 3 zugeordnet ist.

10. Verbindungseinheit gemäß einem der Ansprüche 4 bis 9, deren wenigstens eine Zugriffsschnittstelle (4) und/oder deren wenigstens eine Peripherieschnittstelle (5) dem Gehäuse als Anschlüsse zugeordnet sind.

11. Verbindungseinheit gemäß einem der Ansprüche 1 bis 6, **dadurch gekennzeichnet, dass** der Zeitdatenspeicher (6) in dem Datenverarbeitungsgerät (2) aufgenommen ist und in dem Zeitdatenspeicher (6) Zeitdaten vermittels eines auf dem Datenverarbeitungsgerät (2) ablaufenden Programmprodukts hinterlegbar sind.

12. Verbindungseinheit gemäß einem der vorhergehenden Ansprüche, **dadurch gekennzeichnet, dass** eine Datenverbindung zwischen der Zugriffsschnittstelle (4) und der Peripherieschnittstelle (5) zumindest abschnittsweise über eine faseroptische Leitung verläuft, deren Außenwandung ein Photodetektor zur Erfassung der Lichteinkopplung in die faseroptische Leitung zugeordnet ist.

13. Verfahren zur Steuerung des Zugriffs eines mit einer Zugriffsschnittstelle (4) einer Verbindungseinheit (1) verbundenen Datenverarbeitungsgeräts (2) auf ein mit einer Peripherieschnittstelle (5) der Verbindungseinheit (1) verbundenes Peripheriegerät (3), wobei eine Datenverbindung zwischen der Zugriffsschnittstelle (4) und der Peripherieschnittstelle (5) vermittels eines mit einem Zeitdatenspeicher (6) zur Speicherung von Schaltzeiten datenverbundenen, zeitgesteuerten Schalters (7) gemäß in dem Zeitdatenspeicher (6) hinterlegten Zeitdaten elektrisch getrennt und wiederhergestellt wird.

14. Verfahren gemäß Anspruch 13, **dadurch gekennzeichnet, dass** vor einem Zugriff auf das Peripheriegerät (3) und/oder vor einer Änderung im Zeitdatenspeicher (6) von einer Steuereinheit ein Sicherungspasswort abgefragt wird, es sei denn, dass seit einer vorangegangenen Änderung noch keine Trennung der Datenverbindung zwischen der Zugriffsschnittstelle (4) und der Peripherieschnittstelle (5) erfolgt ist.

15. Verfahren gemäß einem der Ansprüche 13 oder 14, **dadurch gekennzeichnet, dass** es sich bei dem Peripheriegerät (3) um einen Sicherungsdatenspeicher des Datenverarbeitungsgeräts (2) handelt, wobei vor dem Beginn eines Sicherungsvorgangs von dem Datenverarbeitungsgerät (2) eine erwartete Dauer des Sicherungsvorgangs bestimmt wird, daraufhin ein die erwartete Dauer des Sicherungsvorgangs überschreitendes Einschaltintervall bestimmt und in dem Zeitdatenspeicher (6) hinterlegt wird, die Datenverbindung zwischen der Zugriffsschnittstelle (4) und der Peripherieschnittstelle (5) für die Dauer des Einschaltintervalls hergestellt, der Sicherungsvorgang nach Beginn des in dem Zeitdatenspeicher (6) hinterlegten Einschaltintervall gestartet und die Datenverbindung zwischen der Zugriffsschnittstelle (4) und der Peripherieschnittstelle (5) nach Ablauf des Einschaltintervalls mithilfe des zeitgesteuerten Schalters (7) wieder getrennt wird.

16. Verfahren gemäß Anspruch 15, soweit auf Anspruch 13 rückbezogen, **dadurch gekennzeichnet, dass** von dem Datenverarbeitungsgerät (2) vor Beginn des Einschaltintervalls das Sicherungspasswort selbsttätig an die Steuereinheit übermittelt wird.

17. Verfahren gemäß einem der Ansprüche 13 bis 16, **dadurch gekennzeichnet, dass** zwei zeitgesteuerte Schalter (7) antiparallel betrieben werden und während ein erster zeitgesteuerter Schalter (7) während des Einschaltintervalls das Datenverarbeitungsgerät (2) mit dem Peripheriegerät (3) verbindet ein zweiter zeitgesteuerter Schalter das Datenverarbeitungsgerät (2) von allen Netzwerken und anderen Peripheriegeräten trennt.

18. Verfahren gemäß einem der Ansprüche 13 bis 17, **dadurch gekennzeichnet, dass** eine Datenverbindung der Verbindungseinheit (1) zwischen der Zugriffsschnittstelle (4) und der Peripherieschnittstelle (5) zumindest abschnittsweise über eine faseroptische Leitung verläuft, deren Außenwandung ein Photodetektor zur Erfassung der Lichteinkopplung in die faseroptische Leitung zugeordnet ist, wobei die Steuereinheit nur dann eine elektrische Trennung der Datenverbindung einleitet, wenn der Photodetektor zumindest für eine Mindesttotzeit keine Lichteinkopplung in die faseroptische Leitung detektiert.

## Claims

1. Connection unit with an access interface (4) and a peripheral interface (5) for controlling the access of a data processing device (2) connected to the access interface (4) to a peripheral device (3) connected to the peripheral interface (5), wherein the connection unit (1) comprises a time-controlled switch (7) which is data-connected to a time data memory (6) for the automatic electrical disconnection and restoration of data connections between the data processing device (2) and the peripheral device (3) depending on time data which define switching times of the switch (7) and are stored in the time data memory (6).

2. Connection unit according to claim 1, which is internally associated with the data processing device (2) and wherein the peripheral device (3) is an internal backup drive.

3. Connection unit according to claim 2, which is electrically connected to an internal power supply of the data processing device (2).

4. Connection unit according to claim 1, which is connected to the data processing device (2) via an external terminal.

5. Connection unit according to claim 4, which is electrically connected to a power supply of the data processing device (2) via a separate power supply unit or via a power line (8) of a data cable (10) connected to the data processing device (2).

6. Connection unit according to claim 5, in which a power supply provided via said peripheral device (5) is hard-wired between an access interface (4) and a peripheral interface (5).

7. Connection unit according to one of claims 4 to 6, which is accommodated in a housing in which the time data memory (6) is arranged.

8. Connection unit according to claim 7, **characterized in that** time data can be stored in the time data memory (6) via an operating element (11) associated with the housing.

9. Connection unit according to one of claims 7 or 8, **characterized in that** the peripheral device 3 is also associated with the housing.

10. Connection unit according to one of claims 4 to 9, the at least one access interface (4) of which and/or the at least one peripheral interface (5) of which are associated with the housing as terminals.

11. Connection unit according to one of claims 1 to 6, **characterized in that** the time data memory (6) is accommodated in the data processing device (2) and time data can be stored in the time data memory (6) by means of a program product running on the data processing device (2).

12. Connection unit according to one of the preceding claims, **characterized in that** a data connection between the access interface (4) and the peripheral interface (5) extends at least in portions over a fiber-optic line, the outer wall of which is associated with a photodetector for detecting the coupling of light into the fiber-optic line.

13. Method for controlling the access of a data processing device (2) connected to an access interface (4) of a connection unit (1) to a peripheral device (3) connected to a peripheral interface (5) of the connection unit (1), wherein a data connection between the access interface (4) and the peripheral interface (5) is electrically disconnected and restored by means of a time-controlled switch (7) which is data-connected to a time data memory (6) for storing switching times, in accordance with time data stored in the time data memory (6).

14. Method according to claim 13, **characterized in that** before access to the peripheral device (3) and/or before a change in the time data memory (6), a security password is queried by a control unit, unless the data connection between the access interface (4) and the peripheral interface (5) has not been disconnected since a previous change.

15. Method according to one of claims 13 or 14, **characterized in that** the peripheral device (3) is a backup data memory of the data processing device (2), wherein an expected duration of the backup process is determined by the data processing device (2) before the start of a backup process, then a switch-on interval exceeding the expected duration of the backup process is determined and stored in the time data memory (6), the data connection between the access interface (4) and the peripheral interface (5) is established for the duration of the switch-on interval, the backup process is started after the start of the switch-on interval stored in the time data memory (6) and the data connection between the access interface (4) and the peripheral interface (5) is disconnected again after the switch-on interval has elapsed using the time-controlled switch (7).

16. Method according to claim 15, when dependent on claim 13, **characterized in that** the security password is automatically transmitted to the control unit by the data processing device (2) before the start of the switch-on interval.

17. Method according to one of claims 13 to 16, **characterized in that** two time-controlled switches (7) are operated in antiparallel and, while a first time-controlled switch (7) during the switch-on interval connects the data processing device (2) to the peripheral device (3), a second time-controlled switch disconnects the data processing device (2) from all networks and other peripheral devices.

18. Method according to one of claims 13 to 17, **characterized in that** a data connection of the connection unit (1) between the access interface (4) and the peripheral interface (5) extends at least in portions over a fiber-optic line, the outer wall of which is associated with a photodetector for detecting the coupling of light into the fiber-optic line, wherein the control unit only initiates electrical disconnection of the data connection if the photodetector does not detect any light coupling into the fiber-optic line for at least a minimum dead time.

## Revendications

1. Unité de connexion comportant une interface d'accès (4) et une interface périphérique (5) permettant de commander l'accès d'un dispositif de traitement de données (2) connecté à l'interface d'accès (4) à un dispositif périphérique (3) connecté à l'interface périphérique (5), l'unité de connexion (1) comprenant un commutateur (7) temporisé qui est en connexion de données avec une mémoire de données de temps (6), pour l'isolation électrique automatique et le rétablissement des connexions de données entre le dispositif de traitement de données (2) et le dispositif périphérique (3) en fonction des données de temps définissant des moments de commutation du commutateur (7) stockées dans la mémoire de données de temps (6).

2. Unité de connexion selon la revendication 1, laquelle est associée en interne au dispositif de traitement de données (2), et dans laquelle le dispositif périphérique (3) est un lecteur de sauvegarde interne.

3. Unité de connexion selon la revendication 2, laquelle est connectée électriquement à une alimentation électrique interne du dispositif de traitement de données (2).

4. Unité de connexion selon la revendication 1, laquelle est reliée au dispositif de traitement de données (2) par l'intermédiaire d'un raccord externe.

5. Unité de connexion selon la revendication 4, laquelle est connectée électriquement à une alimentation électrique du dispositif de traitement de données (2) par l'intermédiaire d'une partie de réseau isolée ou d'une ligne électrique (8) d'un câble de données (10) connecté au dispositif de traitement de données (2).

6. Unité de connexion selon la revendication 5, dans laquelle entre une interface d'accès (4) et une interface périphérique (5), une alimentation électrique fournie par l'intermédiaire de cette interface périphérique (5) est câblée à demeure.

7. Unité de connexion selon l'une des revendications 4 à 6, laquelle est logée dans un boîtier dans lequel la mémoire de données de temps (6) est disposée.

8. Unité de connexion selon la revendication 7, **caractérisée en ce que** des données de temps peuvent être stockées dans la mémoire de données de temps (6) par l'intermédiaire d'un élément de commande (11) associé au boîtier.

9. Unité de connexion selon l'une des revendications 7 ou 8, **caractérisée en ce que** le dispositif périphérique (3) est également associé au boîtier.

10. Unité de connexion selon l'une des revendications 4 à 9, dont au moins une interface d'accès (4) et/ou au moins une interface périphérique (5) sont associées au boîtier en tant que raccords.

11. Unité de connexion selon l'une des revendications 1 à 6, **caractérisée en ce que** la mémoire de données de temps (6) est logée dans le dispositif de traitement de données (2), et les données de temps peuvent être stockées dans la mémoire de données de temps (6) au moyen d'un produit de programme exécuté sur le dispositif de traitement de données (2).

12. Unité de connexion selon l'une des revendications précédentes, **caractérisée en ce qu'**une connexion de données entre l'interface d'accès (4) et l'interface périphérique (5) s'étend au moins en partie sur une ligne à fibres optiques, dont la paroi extérieure est associée à un photodétecteur permettant de détecter le couplage lumineux dans la ligne à fibres optiques.

13. Procédé de commande de l'accès d'un dispositif de traitement de données (2) connecté à une interface d'accès (4) d'une unité de connexion (1) à un dispositif périphérique (3) connecté à une interface périphérique (5) de l'unité de connexion (1), une connexion de données entre l'interface d'accès (4) et l'interface périphérique (5) étant isolée et rétablie électriquement au moyen d'un commutateur (7) temporisé qui est en connexion de données avec une mémoire de données de temps (6) pour le stockage de temps de commutation, conformément aux données de temps stockées dans la mémoire de données de temps (6).

14. Procédé selon la revendication 13, **caractérisé en ce qu'**un mot de passe de sécurité est demandé avant l'accès au dispositif périphérique (3) et/ou avant une modification dans la mémoire de données de temps (6), sauf si la connexion de données entre l'interface d'accès (4) et l'interface périphérique (5) n'a pas été interrompue depuis la dernière modification.

15. Procédé selon l'une des revendications 13 ou 14, **caractérisé en ce que** le dispositif périphérique (3) est une mémoire de sauvegarde de données du dispositif de traitement de données (2), une durée prévue du processus de sauvegarde étant déterminée avant le début du processus de sauvegarde par le dispositif de traitement de données (2), un intervalle de marche dépassant la durée prévue du processus de sauvegarde étant ensuite déterminé et stocké dans la mémoire de données de temps (6), la connexion de données entre l'interface d'accès (4) et l'interface périphérique (5) étant établie pour la durée de l'intervalle de marche, le processus de sauvegarde étant mis en marche, à l'aide du commutateur (7) temporisé, après le début de la l'intervalle de marche stocké dans la mémoire de données de temps (6), et la connexion de données entre l'interface d'accès (4) et l'interface périphérique (5) étant à nouveau interrompue, à l'aide du commutateur temporisé, après que l'intervalle de marche s'est écoulé.

16. Procédé selon la revendication 15, pour autant qu'il dépend de la revendication 13, **caractérisé en ce que** le mot de passe de sécurité est automatiquement transmis à l'unité de commande par le dispositif de traitement de données (2) avant le début de l'intervalle de marche.

17. Procédé selon l'une des revendications 13 à 16, **caractérisé en ce que** deux commutateurs (7) temporisés sont actionnés de façon antiparallèle, et alors qu'un premier commutateur (7) temporisé connecte le dispositif de traitement de données (2) au dispositif périphérique (3) pendant l'intervalle de marche, un second commutateur temporisé isole le dispositif de traitement de données (2) de tous les réseaux et autres dispositifs périphériques.

18. Procédé selon l'une des revendications 13 à 17, **caractérisé en ce qu'**une connexion de données de l'unité de connexion (1) entre l'interface d'accès (4) et l'interface périphérique (5) s'étend au moins en partie sur une ligne à fibres optiques dont la paroi extérieure est associée à un photodétecteur permettant de détecter le couplage lumineux dans la ligne à fibres optiques, l'unité de commande n'initiant l'isolation électrique de la connexion de données que si le photodétecteur ne détecte aucun couplage lumineux dans la ligne à fibres optiques pendant au moins un temps mort minimum.
